# FASCICULE DE BREVET EUROPEEN

(11) **EP 2 956 687 B1**
(45) Date de publication et mention de la délivrance du brevet: **12.04.2017**
(21) Numéro de dépôt: 14706896.9
(22) Date de dépôt: 05.02.2014
(51) Int. Cl.: F16F 9/49, F16F 9/32, F16F 9/06

(54) **DISPOSITIF AMORTISSEUR DE FIN DE COURSE**
ENDLAGENDÄMPFUNG
END-OF-STROKE CUSHIONING DEVICE

(30) Priorité: 12.02.2013 FR 1351154
(43) Date de publication de la demande: 23.12.2015
(73) Titulaire: Peugeot Citroën Automobiles SA, 78140 Vélizy Villacoublay (FR)
(72) Inventeur: BARALE, Stephane, F-92130 Issy Les Moulineaux (FR); BUQUET, Jeremie, F-62760 Warlincourt Les Pas (FR)
(74) Mandataire: Rosenberg, Muriel Sylvie
(86) Numéro de dépôt international: PCT/FR2014/050222
(87) Numéro de publication internationale: WO 2014/125190

(56) Documents cités:
- FR-A- 821 852
- FR-A1- 2 973 853
- GB-A- 486 205
- US-A- 3 040 907
- US-A1- 2010 116 608

## Description

L'invention a trait à un dispositif coulissant tel qu'un dispositif de suspension de véhicule. Plus particulièrement, l'invention a trait à l'amortissement notamment en fin de course d'un tel dispositif.

Le document de brevet FR 0 321 324 A1 divulgue un dispositif de suspension de véhicule automobile, plus précisément une jambe de force de suspension hydropneumatique. Cette jambe de force comprend essentiellement un cylindre destiné à être rigidement relié à un moyeu de roue du véhicule, et une tige coulissant dans ce cylindre. La tige est creuse axialement et comprend à une extrémité un piston coulissant de manière étanche dans le cylindre. L'autre extrémité de la tige est fixée à un support fixé à la carrosserie du véhicule. Elle est également hydrauliquement reliée à une sphère comprenant une membrane élastique formant une chambre renfermant de l'azote sous pression. La jambe de force est destinée à être remplie d'huile jusqu'à la membrane de la sphère. Les mouvements de compression de la jambe de force déplacent un certain volume d'huile au travers de la tige jusqu'à la membrane de la sphère, le volume d'azote sous pression assurant la fonction de ressort de la suspension. Un étranglement est prévu dans le passage d'huile entre la tige et la sphère de manière à assurer la fonction d'amortissement de la suspension. Le dispositif de cet enseignement comprend en outre des moyens d'amortissement des mouvements de rapprochement et d'extension du cylindre et de la tige. Ces moyens comprennent, dans le fond du cylindre, un élément destiné à pénétrer de manière progressive la cavité du piston, de manière à progressivement réduire la section de passage de l'huile au travers du piston en fin de course de rapprochement du cylindre et de la tige (compression). Les moyens d'amortissement comprennent également une bague cylindrique coulissant sur la surface extérieure de la tige, cette bague étant liée au cylindre, au niveau d'une bague de guidage et d'étanchéité avec la tige, située à l'extrémité supérieure du cylindre. Cette bague présente la particularité qu'elle est d'épaisseur variable, augmentant progressivement depuis son bord libre. Un manchon est fixé au piston, s'étendant le long d'une portion inférieure de la tige. Ce manchon est concentrique avec la tige et de diamètre supérieur de manière à ménager un volume annulaire dans lequel la bague coulissante peut pénétrer. Lors de l'extension de la jambe de force, l'huile contenue dans la chambre supérieure est refoulée au travers d'un orifice dans le bas de la tige, passant par l'espace annulaire délimité par le manchon. En fin de course du mouvement d'extension, la bague coulissante pénètre l'espace entre la tige et le manchon et réduit ainsi progressivement la section de passage du fluide, assurant ainsi un amortissement progressif. La réalisation de ces moyens d'amortissement est toutefois coûteuse notamment en raison de la forme complexe de la bague coulissante et du manchon. De plus, des contraintes importantes peuvent être exercées par le fluide sous pression au niveau du passage réduit entre la bague et le manchon. Ils doivent donc être robustes tout en étant de géométrie très précise.

GB486205A divulgue un dispositif coulissant dont la paroi du cylindre est percée de trous répartis à des hauteurs différentes, par lesquels le liquide sous pression passe du cylindre de la pompe dans une chambre formant conduite de retour et entourant le cylindre de la pompe, le piston servant en même temps d'élément obturateur pour les trous. L'invention a pour objectif de proposer une solution palliant au moins une des déficiences de l'état de la technique sus mentionné. Plus particulièrement, l'invention a pour objectif de proposer des moyens d'amortissement de construction plus simple, économique et fiable.

L'invention a pour objet un dispositif coulissant comprenant: un cylindre; un piston monté coulissant dans le cylindre; une tige reliée au piston, la tige étant creuse axialement et comprenant une paroi; des moyens d'amortissement d'un mouvement de coulissement du dispositif, lesdits moyens comprenant une bague cylindrique coulissant sur la tige et liée en mouvement avec le cylindre; remarquable en ce que les moyens d'amortissement comprennent, en outre, des orifices calibrés dans la paroi de la tige et répartis axialement, les orifices et la bague étant configurés pour que le fluide déplacé par le mouvement coulissant du dispositif soit refoulé au travers des orifices, la section de passage desdits orifices étant progressivement réduite lors de leur recouvrement par ladite bague.

Le dispositif peut être un élément de suspension notamment pour véhicule automobile. Il peut également être un vérin à commande hydraulique ou pneumatique. Il peut également être un amortisseur de mouvement.

Le piston coulisse préférentiellement de manière étanche avec le cylindre.

Selon un mode avantageux de l'invention, le dispositif comprend des moyens de guidage et d'étanchéité entre le cylindre et la tige, la bague coulissante étant située axialement entre lesdits moyens et le piston et préférentiellement liée aux moyens de guidage et d'étanchéité.

Selon un mode avantageux de l'invention, le creux de la tige est débouchant à au moins une des extrémités de ladite tige, le piston étant préférentiellement situé à une extrémité débouchante de ladite tige.

Selon un mode avantageux de l'invention, le piston est configuré pour être étanche entre la tige et le cylindre lors du mouvement de coulissement amorti, et pour permettre le passage de fluide lors d'un mouvement de coulissement opposé.

Selon un mode avantageux de l'invention, le piston comprend au moins un passage, préférentiellement plusieurs passages, orienté(s) essentiellement axialement, et le dispositif comprend une bague d'obturation dudit ou desdits passages.

Selon un mode avantageux de l'invention, le dispositif comprend une bague de butée fixe sur la tige, située axialement entre la bague coulissante et le piston de manière à servir de butée à la bague coulissante.

Selon un mode avantageux de l'invention, la bague d'obturation est montée librement coulissante sur la tige entre le piston et la bague de butée. Alternativement, un ressort de pression peut être prévu entre la bague de butée et la bague d'obturation, de manière à pousser la bague d'obturation vers le piston.

Le profil extérieur de la bague d'obturation peut être non symétrique et configuré pour que les pertes de charge lors du mouvement de coulissement amorti soient supérieures aux pertes de charge lors du mouvement opposé. Le profil extérieur peut par exemple être généralement conique. Ces mesures permettent d'augmenter l'effort exercé par le fluide sur la bague d'obturation lors de son mouvement de fermeture des passages du piston. Elles permettent également de diminuer les pertes de charge lors de l'écoulement du fluide au travers des passages du piston lors du mouvement opposé au mouvement de coulissement amorti.

Selon un mode avantageux de l'invention, les orifices calibrés comprennent, dans l'ordre de recouvrement progressif par la bague coulissante lors du mouvement de coulissement amorti, un orifice d'une première section suivi de plusieurs orifices, chacun, d'une deuxième section inférieure à la première, préférentiellement inférieure à 10% de la première section.

Selon un mode avantageux de l'invention, le mouvement de coulissement amorti est un mouvement d'extension du dispositif, l'amortissement par la bague coulissante et les orifices calibrés étant préférentiellement actif uniquement en fin(s) de course d'extension du dispositif. La ou les fins de course peuvent s'étendre sur une certaine portion de la course totale du dispositif, ladite portion pouvant être comprise entre 15% et 1%, préférentiellement entre 10% et 5%, de la course totale. Alternativement, l'amortissement par la bague coulissante et les orifices calibrés peut être actif sur une portion de course dépassant celle de la ou des fins de course. Ladite portion peut par exemple être comprise entre 50% et 5%, préférentiellement entre 40% et 10%, de la course totale. Une intervention plus ou moins tôt dans le débattement de la suspension du véhicule permet un compromis amélioré du réglage de suspension en autorisant la réduction de l'effet de l'amortisseur classique. Ainsi, autour de la position nominale, le fait de diminuer l'effet de l'amortissement classique permet d'améliorer significativement le confort. L'amortissement plus doux est alors relayé ou complété par l'effet de la butée hydraulique longue. L'influence de cette butée étant à la fois fonction de la position et de la vitesse, elle permet d'amortir les sollicitations de façon proportionnelle, ce que ne sait pas faire l'amortisseur standard qui n'agit qu'en fonction de la vitesse. Une butée hydraulique longue permet donc non seulement de limiter les effets fin de course (bruit, chocs, ...) mais également d'améliorer le compromis confort.

Selon un mode avantageux de l'invention, le dispositif est un dispositif de suspension de véhicule, le cylindre étant destiné à être relié au moyeu de la roue et la tige à la carrosserie du véhicule.

L'invention peut également avoir pour objet une suspension de véhicule équipée du dispositif selon l'invention.

L'invention peut également avoir pour objet un véhicule équipé du dispositif selon l'invention ou de la suspension selon l'invention.

Les mesures de l'invention permettent de réaliser de manière simple et économique un dispositif coulissant avec une fonction d'amortissement. En effet, ses éléments constitutifs, notamment le cylindre, la tige, le piston, la bague coulissante et les orifices calibrés sont particulièrement simples à réaliser. La modification des caractéristiques d'amortissement ne requiert que la modification des orifices, ces derniers pouvant alors être réalisés par de simples opérations de perçage.

D'autres caractéristiques et avantages de la présente invention seront mieux compris à l'aide de la description et des dessins parmi lesquels :
- la figure 1 est une vue en coupe d'un dispositif coulissant conforme à l'invention ;
- la figure 2 est une vue en perspective du piston du dispositif de la figure 1 ;
- la figure 3 est une vue en perspective d'une variante du piston du dispositif de la figure 1 ;
- la figure 4 est une vue de la partie centrale du dispositif de la figure 1, illustrant le fonctionnement lors d'un mouvement d'extension ;
- la figure 5 est, similairement à la figure 4, une vue de la partie centrale du dispositif de la figure 1, illustrant toutefois le fonctionnement lors d'un mouvement de rapprochement.

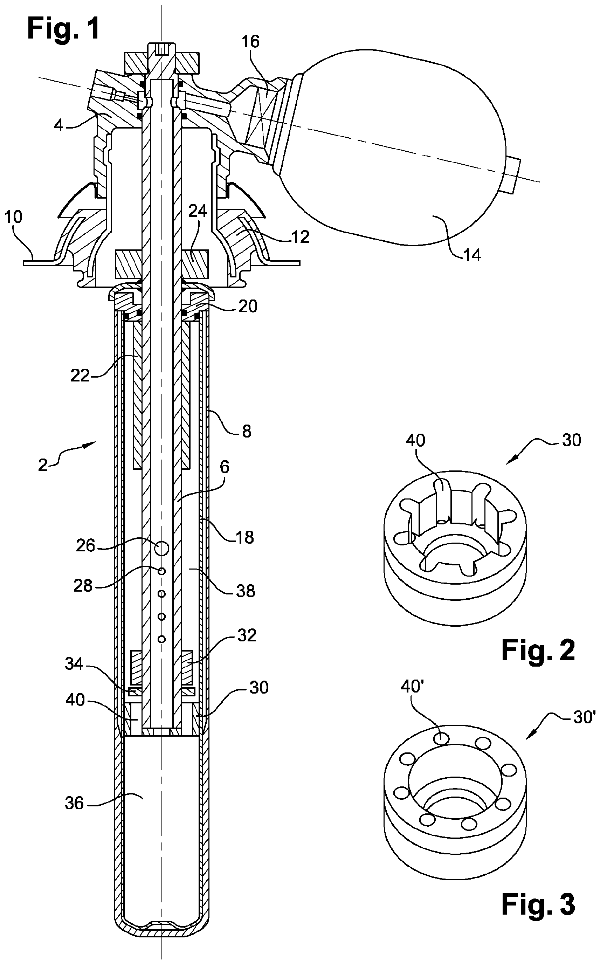

La figure 1 illustre un élément de suspension de véhicule, cet élément étant une jambe de force d'une roue du véhicule. Il s'agit d'un dispositif coulissant 2 comprenant, essentiellement, un cylindre 8, 18 ; une tige creuse axialement 6 avec un piston 30 à une des ses extrémités, coulissant à l'intérieur du cylindre 8, 18. Ce dernier est composé de deux enveloppes 8 et 18, l'une 8, extérieure, destinée à servir de fixation au moyeu de roue (non représenté) et l'autre 18, intérieure, recevant le piston 30. Le cylindre 8, 18 est fermé à son extrémité inférieure. A son extrémité supérieure, il comprend une bague de guidage et d'étanchéité 20 coopérant avec la tige 6. Cette dernière sort du cylindre 8, 18 par ladite bague 20 et s'étend jusqu'à un support 4 auquel elle est fixée rigidement. Ce dernier est destiné à être monté sur la carrosserie du véhicule via une bride de fixation 10 comportant des moyens de compensation 12 tels que des moyens élastiques, aptes à permettre de légère variation d'inclinaison de la tige et du support par rapport à la bride et la carrosserie. La tige est également reliée hydrauliquement au support 4, ce dernier comportant un passage reliant la tige 6 à une sphère 14. Cette dernière est pourvue d'une membrane (non visible) délimitant le volume de la sphère en une première chambre (non visible, correspondant essentiellement à la moitié droite de la sphère à la figure 1) remplie de gaz tel que de l'azote et une deuxième chambre (non visible, correspondant essentiellement à la moitié gauche de la sphère à la figure 1) en communication avec le passage d'huile du support 4. Des moyens de restriction 16 du passage d'huile sont prévus de manière à assurer une fonction d'amortissement des mouvements de compression du dispositif. La membrane sous pression d'azote assure la fonction ressort de la suspension.

La tige 6 est creuse sur une majeure partie de sa longueur, depuis son extrémité située dans le cylindre 8, 18 jusqu'à proximité de son autre extrémité. Le creux de la tige 6 est débouchant à son extrémité située dans le cylindre 8, 18, de manière à permettre le passage d'huile entre la chambre inférieure 36 et la sphère 14, la chambre inférieure étant une chambre de compression lors d'un mouvement de rapprochement de la tige et du cylindre, c'est-à-dire lors d'un mouvement dit d'attaque correspondant à une montée de la roue par rapport à la carrosserie.

La tige 6 comprend également des orifices 26 et 28 dans sa paroi de manière à communiquer avec la chambre supérieure 38. Cette chambre est une chambre de compression lors d'un mouvement d'extension du dispositif, c'est-à-dire lors d'un mouvement de détente correspondant à une descente de la roue par rapport à la carrosserie. En effet, lors d'un tel mouvement, le volume de la chambre 38 diminue par le rapprochement de la bague de guidage et d'étanchéité 20 du piston 30. Ce dernier est rigidement lié à l'extrémité de la tige. Il comporte des passages axiaux 40 répartis de manière circonférentielle entre la tige 6 et la paroi 18 du cylindre 8, 18.

La figure 2 illustre la construction du piston 30 et la figure 3 illustre une variante possible 30' du piston.

Une bague d'obturation 34 est disposée en face des passages 40 du piston 30. Cette bague est disposée de manière à être libre de coulisser le long de la tige 6 entre le piston 30 et une bague butée 32. Cette dernière est rigidement liée à la tige 6 et autorise un passage d'huile entre la tige et la paroi 18 du cylindre 8, 18 ; plus particulièrement entre sa surface extérieure et la paroi 18. Un ressort de pression peut être prévu entre les bague d'obturation 34 et la bague butée 32, de manière à faciliter la fermeture des passages 40 du piston 30. Le profil extérieur de la bague d'obturation peut être configuré pour augmenter les efforts exercés par le fluide lors de son écoulement au travers des passages 40, correspondant à un mouvement de rapprochement de la tige et du cylindre. Il peut également être configuré pour diminuer les pertes de charges lorsque le fluide s'écoule en sens inverse. Il peut par exemple présenter une arête vive du côté de la bague butée 32 et une arête arrondie du côté du piston 30.

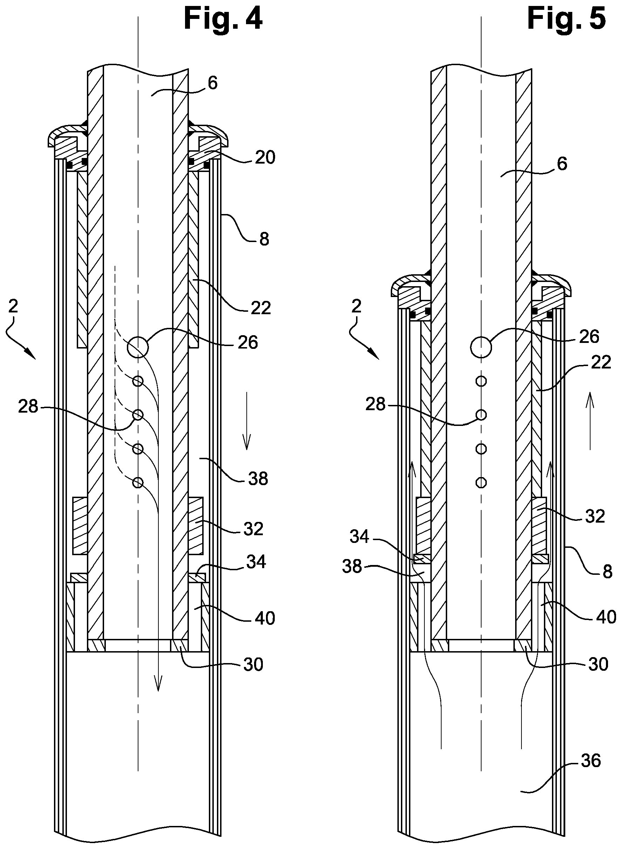

La figure 4 illustre le fonctionnement du dispositif lors d'un mouvement d'extension, ce mouvement étant matérialisé par la flèche dirigée vers le bas et correspondant au mouvement du cylindre 8, 18 par rapport à la tige 6. La bague de guidage et d'étanchéité 20 rigidement liée au cylindre 8, 18 refoule l'huile contenue dans la chambre supérieure 38 vers le bas. Ce débit d'huile dirigé vers le bas déplace la bague d'obturation 34 contre les passages 40 du piston 30 et bloque ainsi le passage d'huile au niveau dudit piston. L'huile est alors refoulée au travers des orifices 26 et 28 formés dans la paroi de la tige 6. La bague coulissante 22 se déplaçant vers le bas au même titre que la bague de guidage et d'étanchéité 20, elle recouvre progressivement les orifices 26 et 28 en question est réduit ainsi progressivement la section de passage équivalente, assurant ainsi un amortissement progressif en fin de course d'extension.

La section de passage des orifices 28 est sensiblement inférieure à celle de l'orifice 26 situé en tête, préférentiellement inférieure à 10% de celle de l'orifice 26 situé en tête. Différentes configurations d'orifices sont envisageables, en fonction de la progressivité d'amortissement voulu. Le choix des diamètres et positions des trous peut être optimisé par calcul pour répondre à un aspect de standardisation d'outillage d'une part, et au respect de la section débitante voulue d'autre part, avec toutefois un compromis sur les transitoires provoqués par la discontinuité des orifices. La réalisation d'orifices calibrés est une opération relativement simple et maîtrisée.

La figure 5 illustre le dispositif des figures 1 et 4 lors qu'il est en position d'extension maximale et qu'il est mouvement de rapprochement du cylindre et de la tige. On peut observer que le bord libre de la bague coulissante 22 est en contact avec la bague de butée 32 et que tous les orifices 28 sont couverts par la bague coulissante. Lors d'un mouvement de rapprochement ou de compression du dispositif, l'huile contenue dans la chambre inférieure 36 peut s'écouler librement au travers des passages 40 du piston 30, la pression de l'huile ayant effectivement pour effet de décoller la bague d'obturation 34 et éventuellement de la plaquer contre la bague butée 32. L'huile peut ainsi remplir progressivement la chambre supérieure 38 au fur et à mesure qu'elle grandit de par le mouvement de rapprochement du cylindre et de la tige.

## Revendications

1. Dispositif coulissant (2) comprenant :
- un cylindre (8, 18) ;
- un piston (30) monté coulissant dans le cylindre (8, 18) ;
- une tige (6) reliée au piston (30), la tige étant creuse axialement et comprenant une paroi ;
- des moyens d'amortissement d'un mouvement de coulissement du dispositif, lesdits moyens comprenant une bague cylindrique (22) coulissant sur la tige (6) et liée en mouvement avec le cylindre (8, 18) ;
**caractérisé en ce que** les moyens d'amortissement comprennent, en outre, des orifices calibrés (26, 28) dans la paroi de la tige (6) et répartis axialement, les orifices (26, 28) et la bague (22) étant configurés pour que le fluide déplacé par le mouvement coulissant du dispositif soit refoulé au travers des orifices, la section de passage desdits orifices étant progressivement réduite lors de leur recouvrement par ladite bague.

2. Dispositif coulissant (2) selon la revendication 1, **caractérisé en ce qu'**il comprend des moyens de guidage et d'étanchéité (20) entre le cylindre (8, 18) et la tige (6), la bague coulissante (22) étant située axialement entre lesdits moyens (20) et le piston (30) et préférentiellement liée auxdits moyens (20).

3. Dispositif coulissant (2) selon l'une des revendications 1 et 2, **caractérisé en ce que** le creux de la tige (6) est débouchant à au moins une des extrémités de ladite tige, le piston (30) étant préférentiellement situé à une extrémité débouchante de ladite tige.

4. Dispositif coulissant (2) selon l'une des revendications 1 à 3, **caractérisé en ce que** le piston (30) est configuré pour être étanche entre la tige (6) et le cylindre (18) lors du mouvement de coulissement amorti, et pour permettre le passage de fluide lors d'un mouvement de coulissement opposé.

5. Dispositif coulissant (2) selon la revendication 4, **caractérisé en ce que** le piston (30) comprend au moins un passage, préférentiellement plusieurs passages (40), orienté(s) essentiellement axialement, et le dispositif comprend une bague d'obturation (34) dudit ou desdits passages (40).

6. Dispositif coulissant (2) selon l'une des revendications 1 à 5, **caractérisé en ce qu'**il comprend une bague de butée (32) fixe sur la tige (6), située axialement entre la bague coulissante (22) et le piston (30) de manière à servir de butée à ladite bague coulissante (22).

7. Dispositif coulissant (2) selon les revendications 5 et 6, **caractérisé en ce que** la bague d'obturation (34) est montée librement coulissante sur la tige (6) entre le piston (30) et la bague de butée (32).

8. Dispositif coulissant (2) selon l'une des revendications 1 à 7, **caractérisé en ce que** les orifices calibrés comprennent, dans l'ordre de recouvrement progressif par la bague coulissante lors du mouvement de coulissement amorti, un orifice (26) d'une première section suivi de plusieurs orifices (28), chacun, d'une deuxième section inférieure à la première, préférentiellement inférieure à 10% de la première section.

9. Dispositif coulissant (2) selon l'une des revendications 1 à 8, **caractérisé en ce que** le mouvement de coulissement amorti est un mouvement d'extension du dispositif, l'amortissement par la bague coulissante (22) et les orifices calibrés (26, 28) étant préférentiellement actif uniquement en fin de course d'extension du dispositif.

10. Dispositif coulissant (2) selon l'une des revendications 1 à 9, **caractérisé en ce qu'**il est un dispositif de suspension de véhicule, le cylindre étant destiné à être relié au moyeu de la roue et la tige à la carrosserie du véhicule.

## Patentansprüche

1. Gleitvorrichtung (2), die Folgendes umfasst:
- einen Zylinder (8, 18),
- einen Kolben (30), der gleitend in dem Zylinder (8, 18) montiert ist,
- einen Schaft (6), der mit dem Kolben (30) verbunden ist, wobei der Schaft axial ausgehöhlt ist und eine Wand umfasst,
- Mittel zum Dämpfen einer Gleitbewegung der Vorrichtung, wobei die Mittel einen zylindrischen Ring (22) umfassen, der auf dem Schaft (6) gleitet und in Bewegung mit dem Zylinder (8, 18) verbunden ist,
**dadurch gekennzeichnet, dass** die Dämpfmittel unter anderem kalibrierte Öffnungen (26, 28) in der Wand des Schafts (6) umfassen, die axial verteilt sind, wobei die Öffnungen (26, 28) und der Ring (22) derart konfiguriert sind, dass das Fluid, das von der Gleitbewegung der Vorrichtung verdrängt wird, durch Öffnungen gefördert wird, wobei der Durchgangsquerschnitt der Öffnungen allmählich bei ihrem Abdecken durch den Ring verkleinert wird.

2. Gleitvorrichtung (2) nach Anspruch 1, **dadurch gekennzeichnet, dass** sie Führungs- und Dichtmittel (20) zwischen dem Zylinder (8, 18) und dem Schaft (6) umfasst, wobei der Gleitring (22) axial zwischen den Mitteln (20) und dem Kolben (30) liegt und bevorzugt mit den Mitteln (20) verbunden ist.

3. Gleitvorrichtung (2) nach einem der Ansprüche 1 und 2, **dadurch gekennzeichnet, dass** die Vertiefung des Schafts (6) an mindestens einem der Enden des Schafts mündet, wobei der Kolben (30) bevorzugt an einem mündenden Ende des Schafts liegt.

4. Gleitvorrichtung (2) nach einem der Ansprüche 1 bis 3, **dadurch gekennzeichnet, dass** der Kolben (30) konfiguriert ist, um zwischen dem Schaft (6) und dem Zylinder (18) bei der gedämpften Gleitbewegung dicht zu sein, und um das Durchgehen von Flüssigkeit bei einer entgegengesetzten Gleitbewegung zu erlauben.

5. Gleitvorrichtung (2) nach Anspruch 4, **dadurch gekennzeichnet, dass** der Kolben (30) mindestens einen Durchgang, bevorzugt mehrere Durchgänge (40) umfasst, der/die im Wesentlichen axial ausgerichtet ist/sind, und die Vorrichtung einen Verschlussring (34) des Durchgangs/der Durchgänge (40) umfasst.

6. Gleitvorrichtung (2) nach einem der Ansprüche 1 bis 5, **dadurch gekennzeichnet, dass** sie einen stationären Anschlagring (32) auf dem Schaft (6) umfasst, der axial zwischen dem Gleitring (22) und dem Kolben (30) derart liegt, dass er als Anschlag für den Gleitring (22) dient.

7. Gleitvorrichtung (2) nach den Ansprüchen 5 und 6, **dadurch gekennzeichnet, dass** der Verschlussring (34) frei gleitend auf dem Schaft (6) zwischen dem Kolben (30) und dem Anschlagring (32) montiert ist.

8. Gleitvorrichtung (2) nach einem der Ansprüche 1 bis 7, **dadurch gekennzeichnet, dass** die kalibrierten Öffnungen in der Reihenfolge des allmählichen Verdeckens durch den Gleitring bei der gedämpften Gleitbewegung eine Öffnung (26) mit einem ersten Querschnitt, gefolgt von mehreren Öffnungen (28), die jeweils einen zweiten Querschnitt haben, der kleiner ist als der erste, bevorzugt um 10 % kleiner als der erste Querschnitt, umfassen.

9. Gleitvorrichtung (2) nach einem der Ansprüche 1 bis 8, **dadurch gekennzeichnet, dass** die gedämpfte Gleitbewegung eine Streckbewegung der Vorrichtung ist, wobei die Dämpfung durch den Gleitring (22) und die kalibrierten Öffnungen (26, 28) bevorzugt nur am Ende des Streckhubs der Vorrichtung aktiv ist.

10. Gleitvorrichtung (2) nach einem der Ansprüche 1 bis 9, **dadurch gekennzeichnet, dass** sie eine Fahrzeug-Aufhängungsvorrichtung ist, wobei der Zylinder dazu bestimmt ist, mit der Nabe des Rads verbunden zu sein, und der Schaft mit der Karosserie des Fahrzeugs.

## Claims

1. A sliding device (2) comprising:
- a cylinder (8, 18);
- a piston (30) mounted in the cylinder (8, 18) in a sliding manner,
- a rod (6) connected to the piston (30), the rod being axially hollow and comprising a wall;
- means for damping a sliding movement of the device, said means comprising a cylindrical ring (22) sliding on the rod (6) and movably connected to the cylinder (8, 18);
**characterized in that** the damping means comprise, furthermore, calibrated openings (26, 28) in the wall of the rod (6) and distributed axially, the openings (26, 28) and the ring (22) being configured such that the fluid displaced by the sliding movement of the device is driven back through the openings, the passage cross-section of said openings being progressively reduced during their covering by said ring.

2. The sliding device (2) according to claim 1, **characterized in that** it comprises guiding and sealing means (20) between the cylinder (8, 18) and the rod (6), the sliding ring (22) being situated axially between said means (20) and the piston (30) and preferably connected to said means (20).

3. The sliding device (2) according to one of claims 1 and 2, **characterized in that** the hollow of the rod (6) opens out at at least one of the ends of said rod, the piston (30) being preferably situated at an opening end of said rod.

4. The sliding device (2) according to one of claims 1 to 3, **characterized in that** the piston (30) is configured to be sealed between the rod (6) and the cylinder (18) during the damped sliding movement, and to permit the passage of fluid during an opposite sliding movement.

5. The sliding device (2) according to claim 4, **characterized in that** the piston (30) comprises at least one passage, preferably a plurality of passages (40), oriented substantially axially, and the device comprises a closing ring (34) of said passage or passages (40).

6. The sliding device (2) according to one of claims 1 to 5, **characterized in that** it comprises a stop ring (32) fixed on the rod (6), situated axially between the sliding ring (22) and the piston (30) so as to serve as a stop to said sliding ring (22).

7. The sliding device (2) according to claims 5 and 6, **characterized in that** the closing ring (34) is mounted in a freely sliding manner on the rod (6) between the piston (30) and the stop ring (32).

8. The sliding device (2) according to one of claims 1 to 7, **characterized in that** the calibrated openings comprise, in the order of progressive covering by the sliding ring during the damped sliding movement, an opening (26) of a first section followed by several openings (28), each having a section smaller than the first, preferably less than 10 % of the first section.

9. The sliding device (2) according to one of claims 1 to 8, **characterized in that** the damped sliding movement is an extension movement of the device, the damping by the sliding ring (22) and the calibrated openings (26, 28) being preferably active solely at the end of the extension course of the device.

10. The sliding device (2) according to one of claims 1 to 9, **characterized in that** it is a vehicle suspension device, the cylinder being intended to be connected to the hub of the wheel and the rod to the body of the vehicle.
